# FASCICULE DE BREVET EUROPEEN

(11) **EP 3 515 700 B1**
(45) Date de publication et mention de la délivrance du brevet: **19.08.2020**
(21) Numéro de dépôt: 17772402.8
(22) Date de dépôt: 22.09.2017
(51) Int. Cl.: B32B 5/02, B32B 5/04, B32B 5/24, B32B 7/04, B32B 3/28, B29C 70/10

(54) **ARMATURE DE RENFORT, MATÉRIAU COMPOSITE COMPRENANT UNE TELLE ARMATURE DE RENFORT, PROCÉDÉ DE MISE EN OEUVRE D'UNE TELLE ARMATURE DE RENFORT**
VERSTÄRKER, VERBUNDSTOFF MIT SOLCH EINEM VERSTÄRKER SOWIE VERFAHREN ZUR VERWENDUNG SOLCH EINES VERSTÄRKERS
REINFORCER, COMPOSITE MATERIAL COMPRISING SUCH A REINFORCER, METHOD OF USING SUCH A REINFORCER

(30) Priorité: 23.09.2016 FR 1658975
(43) Date de publication de la demande: 31.07.2019
(73) Titulaire: Porcher Industries, 38300 Badinières (FR)
(72) Inventeur: PORCHERET, Jacques, 38340 Veyssilieu (FR); MACREZ, Freddy, 01150 Lagnieu (FR); RAMEL, Patrick, 01800 Charnoz (FR)
(74) Mandataire: Lavoix
(86) Numéro de dépôt international: PCT/EP2017/074106
(87) Numéro de publication internationale: WO 2018/055118

(56) Documents cités:
- US-A1- 2009 202 776
- US-A1- 2009 258 191
- US-B1- 9 097 007

## Description

La présente invention concerne une armature de renfort, un matériau composite comprenant une telle armature de renfort, ainsi qu'un procédé de mise en œuvre d'une telle armature de renfort.

L'invention se rapporte au domaine général des matériaux composites incluant une armature de renfort à structure aérée, c'est à-dire comprenant des espaces libres, ou à des matériaux formés par une telle armature de renfort à structure aérée.

US 2009/258191 A1 décrit un laminé thermo-rétractable comprenant un film thermo-rétractable et un réseau de fibres non tissé juxtaposés, liés entre eux au niveau de points de liaison espacées.

US 2009/202776 A1 décrit un matériau composite d'armature comprenant une feuille fibreuse continue de renfort, des bandes de matériau faible densité, une matrice polymère et deux couches de peau.

L'invention vise à proposer une nouvelle armature de renfort à usage multiple, en particulier pour la réalisation de matériaux composites, cette armature de renfort étant peu coûteuse, tout en étant facile à utiliser et à transporter.

L'invention a pour objet une armature de renfort comprenant :
- une couche rétractable selon une direction de retrait, sous l'effet d'un traitement thermique de rétractation, d'un état initial à un état rétracté,
- une première couche ondulable, qui comprend une grille de fils rapportée contre la couche rétractable, la grille de fils de la première couche ondulable étant liée à la couche rétractable par des traits de liaison de l'armature de renfort, les traits de liaison étant espacés les uns des autres et s'étendant transversalement par rapport à la direction de retrait, la première couche ondulable présentant un retrait sensiblement nul ou plus faible que celui de la couche rétractable selon la direction de retrait sous l'effet du traitement thermique de rétractation, de manière que :
   ∘ à l'état initial de la couche rétractable, des tronçons de la première couche ondulable, définis chacun entre deux traits de liaison consécutifs, sont rabattus contre la couche rétractable, et
   ∘ à l'état rétracté de la couche rétractable, les tronçons de la première couche ondulable sont courbés.

Grâce à l'invention, l'armature de renfort est conçue pour passer d'un état dans lequel elle occupe peu d'espace, lorsque la couche rétractable est à l'état initial, jusqu'à un état rétracté dans lequel elle occupe un volume supérieur tout en délimitant des espaces libres. En effet, le caractère courbé des tronçons permet de ménager des espaces libres délimités par la couche ondulable, la couche rétractable, et les traits de liaison, pour chaque tronçon. En conséquence, cette armature de renfort trouve de multiples applications, en étant utilisée en tant que telle ou pour la réalisation d'un matériau composite. Pour la formation d'un matériau composite, on peut avantageusement noyer, remplir ou recouvrir l'armature de renfort avec une matrice, alors que la couche rétractable est à l'état rétracté. En effet, à l'état rétracté de la couche rétractable, les tronçons de la première couche ondulable sont contraints de présenter une forme courbée délimitant un certain volume libre, qui peut avantageusement être renforcé par addition d'une matrice. La couche rétractable étant à l'état rétracté, des conduits sont avantageusement définis entre les tronçons courbés et la couche rétractable, ces conduits permettant notamment l'introduction de la matrice en leur sein pour former le matériau composite, en liant cette matrice à l'armature de renfort.

Le passage de l'état initial à l'état rétracté peut être facilement obtenu à l'aide d'un traitement thermique de rétractation, lequel peut être effectué sur le lieu dans lequel on prévoit de former le matériau composite. Le transport de l'armature de renfort jusqu'à ce lieu est ainsi facilité, puisqu'il peut être effectué alors que la couche rétractable est à l'état initial, dans lequel les tronçons de la couche ondulable sont rabattus et occupent un volume réduit. Alternativement, l'étape de traitement thermique de rétractation peut être effectuée au cours de la fabrication de l'armature de renfort, afin que l'armature de renfort soit prête à l'emploi. L'armature de renfort est donc particulièrement facile à utiliser et à transporter.

Selon d'autres caractéristiques optionnelles et avantageuses de l'invention, prises seules ou en combinaison :
- la couche rétractable comprend des fils rétractables s'étendant selon la direction de retrait, les fils rétractables étant préférentiellement réalisés en polymère rétractable, synthétique ou naturel, par exemple polyester, polyéther, polyéthylène, polypropylène, polyamide, laine.
- le polymère rétractable est choisi pour que le traitement thermique de rétractation comprenne un chauffage à une température de retrait comprise entre 100 et 200°C, préférentiellement 180°C.
- la couche rétractable comprend des fils transversaux qui présentent un retrait sensiblement nul ou plus faible que celui des fils rétractables sous l'effet du traitement thermique de rétractation, et qui sont disposés transversalement par rapport à la direction de retrait, tout en étant liés aux fils rétractables afin de former une grille avec les fils rétractables.
- la grille de la première couche ondulable comprend des fils inorganiques, lesquels comprennent préférentiellement du verre, du carbone, de la céramique ou du métal.
- la première couche ondulable comprend une couche de matériau non tissé, la grille de la première couche ondulable étant noyée dans, ou liée à, la couche de matériau non tissé.
- la couche de matériau non tissé est réalisée en polymère, par exemple un polyester, un hybride polyester-cellulosique, un polypropylène, polyéthylène, un polyamide ou un polyuréthane.
- la première couche ondulable est liée à la couche rétractable par exécution d'un traitement de liaison, par exemple de type thermique ou chimique, seulement au niveau de chaque trait de liaison.
- l'armature de renfort comprend une deuxième couche ondulable, qui comprend une grille de fils rapportée contre la couche rétractable, de sorte que la première couche ondulable et la deuxième couche ondulable sont rapportées de part et d'autre de la couche rétractable, la grille de la deuxième couche ondulable étant liée à la couche rétractable par des traits de liaison, qui sont avantageusement superposés ou confondus avec les traits de liaison de la première couche ondulable, la deuxième couche ondulable présentant un retrait sensiblement nul ou plus faible que celui de la couche rétractable, selon la direction de retrait, sous l'effet du traitement thermique de rétractation, de manière que :
- à l'état initial de la couche rétractable, des tronçons de la deuxième couche ondulable, définis chacun entre deux traits de liaison consécutifs, sont rabattus contre la couche rétractable, et
- à l'état rétracté de la couche rétractable, les tronçons de la deuxième couche ondulable sont courbés.

L'invention a également pour objet un matériau composite comprenant une armature de renfort, conforme à ce qui précède, dont la couche rétractable est à l'état rétracté, et comprenant :
- une matrice, l'armature de renfort étant remplie par, recouverte par, ou noyée dans la matrice, et/ou
- une couche de peau rapportée contre la première couche ondulable et liée à la couche ondulable par l'intermédiaire d'au moins deux tronçons courbés.

L'invention a également pour objet un procédé de mise en œuvre d'une armature de renfort conforme à ce qui précède. Le procédé comprend une première étape a), au cours de laquelle, la couche rétractable étant à l'état initial, on effectue un traitement thermique de rétractation pour faire passer la couche rétractable à l'état rétracté, ainsi qu'au moins l'une des étapes b) et c) suivantes, effectuées successivement à la première étape a) :
- b) on noie, on remplit ou on recouvre l'armature de renfort avec une matrice,
- c) on lie une couche de peau contre la première couche ondulable, par exemple par contre-collage, par l'intermédiaire d'au moins deux tronçons courbés.

L'invention sera mieux comprise à la lecture de la description qui va suivre, donnée uniquement à titre d'exemple non limitatif et faite en se référant aux dessins dans lesquels :
- la figure 1 est une vue en perspective d'une armature de renfort conforme à un premier mode de réalisation de l'invention ;
- les figures 2 et 3 sont des vues de côté de l'armature de renfort de la figure 1, selon deux configurations différentes ;
- la figure 4 est une vue en perspective d'une pièce en matériau composite, coupée selon un plan P5, comprenant une armature de renfort conforme à l'invention ;
- les figure 5 et 6 sont des vues de côté similaires à celles des figures 2 et 3, d'une armature de renfort conforme à un deuxième mode de réalisation de l'invention, l'armature de renfort étant représentée dans deux configurations différentes, et
- la figure 7 est une vue schématique d'une machine de fabrication de l'armature de renfort des figures 5 et 6.

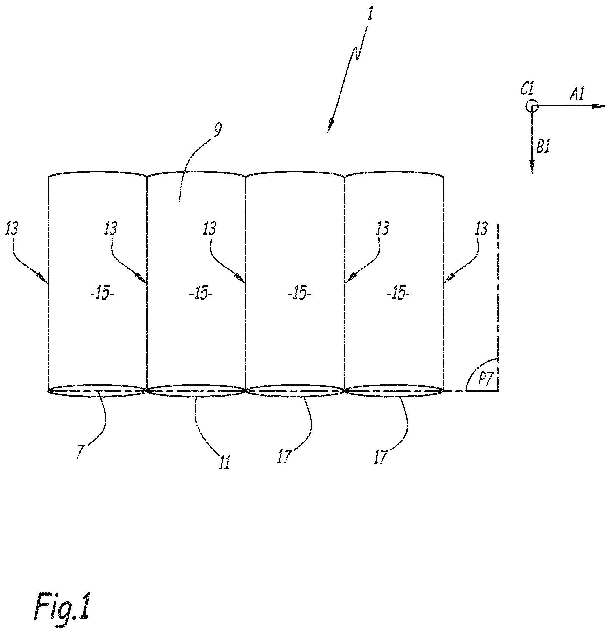

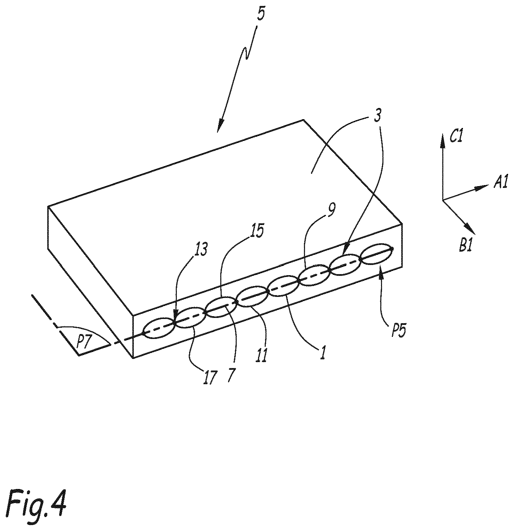

L'armature de renfort 1 du premier mode de réalisation, illustrée sur les figures 1 à 4, peut être utilisée seule, ou convenir à la fabrication de nombreux types de matériaux composites. En particulier, l'armature de renfort peut être recouverte (c'est-à-dire enrobée), remplie ou noyée avec une matrice 3, de consolidation ou de remplissage, illustrée sur la figure 4. L'armature de renfort 1 et sa matrice 3 forment ensemble un matériau composite.

Sur la figure 4, le matériau composite forme une pièce 5 de forme parallélépipédique. L'armature de renfort 1 est visible au niveau du plan de coupe P5.

Dans ce matériau composite, l'armature de renfort 1 est consolidée en étant noyée dans la matrice de consolidation 3, laquelle est dans un état solide ou durci. Dans ce cas, la matrice 3 est à l'extérieur et dans les espaces à l'intérieur de l'armature 1. En variante non représentée, la matrice présente à l'extérieur de l'armature peut être en couche mince (pellicule) épousant la forme extérieure ondulée.

En fonction du domaine d'application, la matrice de consolidation 3 peut comprendre un ou plusieurs des matériaux suivants :
- un polymère thermodurcissable choisi parmi les polymères suivants :
   ∘ époxydes : polyépoxyde (EP),
   ∘ phénoliques : phénol-formaldéhyde (phénoplaste, PF),
- un polymère thermoplastique choisi parmi les polymères suivants :
   ∘ polyacétals : polyoxyméthylène (POM),
   ∘ acryliques : polyméthacrylate de méthyle (PMMA, Plexiglas), polyacrylonitrile (PAN), 2-cyanoacrylate de méthyle (cyanoacrylate, MCA),
   ∘ cellulosiques : triacétate de cellulose (CA),
   ∘ polyamides : polyamide 6 (PA 6), polyamide 6-6 (PA 6-6, Nylon), polyamide 11 (PA 11), polyamides aromatiques, ou aramides : poly-méta-phénylène isophtalamide (MDP-I, méta-aramide, Nomex), poly-para-phénylène téréphtalamide (PPP-T, para-aramide, Kevlar),
   ∘ polycarbonate (PC) ;
   ∘ polyaryl cetones : polyether cetonecetone PEKK, polyétheréthercétone (PEEK),
   ∘ polyesters : polytéréphtalate d'éthylène (PET), polyester insaturé (UP), polytéréphtalate de butylène (PBT),
   ∘ polyoléfines : polyéthylène (PE), polyéthylène à basse densité (PEBD, LDPE), polyéthylène à basse densité linéaire (PEBDL, LLDPE), polyéthylène à haute densité (PEHD), polyéthylène à ultra-haute masse molaire (PE-UHMW), polypropylène (PP), polyoléfines fluorés : polytétrafluoroéthylène (PTFE, Téflon),
   ∘ styréniques : polystyrène (PS), polystyrène butadiène (SB, polystyrène-choc), styrène acrylonitrile (SAN), acrylonitrile butadiène styrène (ABS),
   ∘ vinyliques : polychlorure de vinyle (PVC), polychlorure de vinylidène (PVDC) ;
      ∘ polyimides (PI) ;
- un élastomère, choisi parmi les élastomères suivants :
   ∘ élastomères : butadiène-acrylonitrile (NBR, caoutchouc nitrile) ;
   ∘ élastomères fluorés, fluoroélastomères : FPM (fluorinated propylene monomer),
   ∘ éthylène-acétate de vinyle (EVA),
   ∘ polychloroprène (CR),
   ∘ polyisoprène (IR, caoutchouc synthétique),
   ∘ silicones ou siloxanes : polydiméthylsiloxane (PDMS), polydiphénylsiloxane (PDPS) ;
- un copolymère basé sur certains des polymères précédents, ou un mélange de polymères ou de copolymères,
- une mousse,
- un matériau minéral, du genre béton, ciment, ou similaire.

L'armature 1 est préférentiellement dépourvue de métal, de sorte que sa résistance à la corrosion est élevée contrairement à une armature métallique.

En variante non représentée, au lieu d'être noyée dans la matrice 3, l'armature 1 est seulement recouverte, c'est-à-dire enrobée, d'une couche de matrice 3 afin d'être durcie, sans être nécessairement remplie par de la matrice 3. La matrice 3 forme alors soit une pellicule mince en surface de l'armature 1, soit une couche plus épaisse plane comme à la figure 4.

Alternativement, la matrice 3 peut être choisie pour simplement remplir l'armature 1, sans couche extérieure. Dans un mode de réalisation, cette matrice 3 rempli l'armature 1 sans significativement durcir ou consolider cette dernière. Dans ce cas, l'armature 1 sert de structure de support ou de coffrage de la matrice de remplissage 3 et peut être liée ou non à cette dernière. La matrice de remplissage 3 peut notamment être formée par une mousse, par exemple polymère, aux propriétés isolantes, sur le plan thermique et/ou phonique, de préférence résistante au feu. A titre d'exemple de mousse, on peut citer les mousses en Polyétherimide (PEI). Alternativement, la matrice 3 de remplissage comprend un matériau poudreux, tel que du sable ou du gravier. Dans le cas où l'armature 1 est noyée, elle est à la fois recouverte et remplie par la matrice 3.

Comme illustré sur les figures 1 à 3, l'armature de renfort 1 comprend une couche rétractable 7, qui définit un plan principal P7 de l'armature 1, ainsi que deux couches ondulables 9 et 11 rapportées et fixées sur la couche rétractable 7, de part et d'autre de cette dernière. En d'autres termes, les couches ondulables 9 et 11 sont rapportées chacune sur l'une des deux faces opposées de la couche rétractable 7.

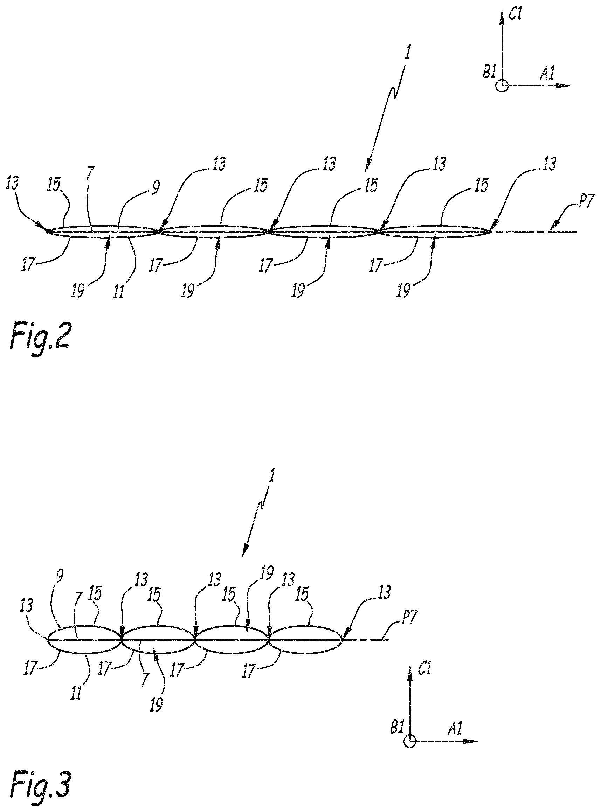

De façon préférentielle, la couche rétractable 7 comprend des fils rétractables qui s'étendent selon une direction de retrait A1, la direction de retrait A1 étant dirigée selon le plan principal P7. Grâce à ces fils rétractables, la couche rétractable 7 évolue, sous l'effet d'un traitement thermique adapté, dit « traitement thermique de rétractation », d'un état initial illustré sur les figures 1 et 2 à un état rétracté illustré sur la figure 3, selon la direction de retrait A1. En pratique, les fils rétractables sont sensiblement parallèles à la direction A1 et sont espacés les uns des autres de façon sensiblement régulière selon une direction transversale B1, la direction B1 étant parallèle au plan P7 et perpendiculaire à la direction A1. Les fils rétractables s'étendent de préférence sur toute la longueur de la couche 7, ou pour le moins sur la majorité de la longueur de cette couche 7.

De préférence, le passage de l'état initial à l'état rétractable des fils rétractables est irréversible.

Pour obtenir le caractère « rétractable » des fils rétractables, chaque fil rétractable est préférentiellement réalisé dans un matériau rétractable, ou traité pour être rétractable. Ce matériau rétractable est préférentiellement un matériau synthétique. Ce matériau rétractable peut être un polymère rétractable, synthétique ou naturel, par exemple polyester, polyéther, polyéthylène, polypropylène, polyamide ou laine.

A l'état initial, les fils rétractables présentent une longueur qui adopte, selon la direction A1, une valeur initiale. A l'état rétracté, la longueur des fils rétractables adopte une valeur réduite par rapport à la valeur initiale, de telle sorte que la longueur selon la direction A1 de la couche rétractable réduit entre l'état initial et l'état rétracté. De préférence, le taux de réduction de la longueur des fils rétractables, ou taux de rétractation, est compris entre 2 et 60%, de préférence 4 à 20%. Le matériau rétractable de la couche rétractable 7 est choisi pour que le traitement thermique de rétractation comprenne, ou consiste en, un chauffage à une température de retrait, par exemple comprise entre 120 et 200°C (degrés Celsius), préférentiellement 180°C. Pour obtenir les caractéristiques susmentionnées, on peut par exemple utiliser un fil rétractable en polyester du type HT101, fabriqué par Hailide®.

La couche rétractable 7 comprend également des fils transversaux, qui présentent un retrait, ou taux de retrait, sensiblement nul ou plus faible que celui des fils rétractables selon la direction A1. Les fils transversaux sont disposés transversalement, en particulier selon la direction B1, par rapport à la direction de retrait A1. Les fils transversaux sont régulièrement espacés les uns des autres dans la direction A1. Les fils transversaux sont liés aux fils rétractables, par exemple par collage ou soudure, afin de former une grille avec les fils rétractables.

Alternativement, on peut prévoir que les fils transversaux sont réalisés dans le même matériau que les fils longitudinaux, mais que les fils transversaux sont rétractés préalablement à la fabrication de la couche rétractable, alors que les fils longitudinaux sont à l'état non rétracté. L'utilisation de deux matériaux identiques facilite en effet la fabrication de la couche rétractable.

Alternativement, l'utilisation de fils longitudinaux et transversaux rétractable dont la température de rétraction est différente, permet de sélectivement rétracter les fils longitudinaux ou transversaux par application d'une température adaptée.

De façon générale, le terme « grille » utilisé dans la présente description fait référence à un assemblage de fils qui s'étendent selon une première direction avec des fils qui s'étendent selon une deuxième direction, sans tissage de ces fils, les fils de la première direction étant liés aux fils de la deuxième direction, par exemple par collage ou soudure des fils entre eux. La grille présente un « pas », qui reflète l'écartement des fils consécutifs de la même direction.

Grâce à la présence de ces fils transversaux, la couche rétractable 7 n'est avantageusement rétractable que selon la direction A1. Les fils transversaux sont préférentiellement réalisés dans un matériau différent de celui des fils rétractables, de préférence du verre ou un autre matériau inorganique. Par exemple, il s'agit de fils de verre continus, par exemple de titre de 11 à 400 tex. D'autres matériaux que ceux cités peuvent être mis en œuvre pour les fils transversaux.

La grille de la couche rétractable 7, à l'état initial, présente de préférence un pas compris entre environ 0,3 et 8 fils/cm, étant entendu que d'autres valeurs de pas sont envisageables en fonction de l'application. De préférence, le pas de la grille de la couche rétractable 7 est suffisamment élevé pour permettre la pénétration de la matrice 3 entre les fils de la grille, lorsque cette matrice est dans un état liquide, ramolli, ou non durci, de sorte que chaque fil de cette grille, ou au moins la majorité des fils, est noyé ou recouvert par la matrice 3.

La grille de la couche rétractable 7, en état initial ou rétracté, est préférentiellement souple à la manière d'une grille classique ou d'un tissu, par exemple de façon à pouvoir être enroulée sur un rouleau. Ainsi, le plan P7 et les différentes directions A1 et B1 représentés aux figures suivent la courbure éventuelle de la couche rétractable 7 et de l'armature 1.

Alternativement à une grille de fils, la couche rétractable 7 comprend un tissu dont les fils d'une direction donnée sont rétractables.

Alternativement à une grille de fils, la couche rétractable 7 comprend une couche de matériau plein ou non-tissé, rétractable au moins selon la direction A1.

Par ailleurs, chaque couche ondulable 9 et 11 comprend une grille de fils, qui est rapportée et fixée à demeure contre la couche rétractable 7, en particulier contre la grille de cette dernière. Les fils des grilles respectives des couches ondulables 9 et 11 s'étendent dans l'alignement des fils rétractables et des fils transversaux de la grille de la couche 7. La grille respective de chaque couche ondulable 9 et 11 comprend des fils qui présentent un retrait sensiblement nul ou inférieur à celui de la couche rétractable 7 sous l'effet du traitement thermique de rétractation, en particulier selon la direction A1.

Pour cela, la grille de chaque couche ondulable 9 et 11 est préférentiellement réalisée en fils inorganiques, par exemple comprenant du verre ou du carbone, ou d'autres matériaux faiblement rétractables sous l'effet du traitement thermique de rétractation. L'utilisation de ces autres matériaux dépend de l'application. On peut utiliser par exemple des fils de verre, des fils de carbone, des fils céramiques, ou des fils métalliques.

Alternativement, la grille de chaque couche ondulable 9 et 11 est réalisée en fils organiques, tels que du coton, du lin ou de la laine.

De préférence, le pas des grilles respectives des couches ondulables 9 et 11 présente la même valeur que celui du pas de la grille de la couche rétractable 7, si cette dernière comprend une grille. Alternativement, la valeur de pas des grilles des différentes couches 7, 9 et 11 est différente.

Tout comme la grille de la couche 7, les grilles des couches 9 et 11 sont souples, par exemple à la manière d'un à la manière d'une grille classique ou d'un tissu, de façon à pouvoir être enroulées sur un rouleau.

De plus, chaque couche ondulable 9 et 11 peut comprendre une couche de matériau non tissé, dans laquelle la grille de la couche 9 ou 11 concernée est noyée. Si elle n'est pas noyée, chaque couche de matériau non tissé est pour le moins liée à sa grille respective, par exemple par collage ou soudure. Chaque couche de matériau non tissé s'étend préférentiellement sur toute la longueur, ou au moins sur la majorité de la longueur de la couche 9 ou 11 concernée. De préférence, ces couches non tissées sont chacune formées par une pellicule conférant le caractère souple susmentionné aux couches 9 ou 11 respectivement. Chaque couche non tissée présente préférentiellement une porosité suffisamment faible pour que l'armature 1 puisse être remplie par la matrice 3 sans fuite de cette dernière au travers de cette couche non tissée, hormis éventuellement des solvants ou des gaz que cette matrice 3 pourrait contenir.

De préférence, la couche de matériau non tissé est réalisée dans un matériau synthétique, notamment en polymère, par exemple un polyester, un hybride polyester-cellulosique, un polypropylène, polyéthylène, un polyamide ou un polyuréthane.

Alternativement à une couche de matériau non tissé, on peut prévoir une couche de matériau tissé, en fonction de l'application.

De façon alternative ou conjointe à la présence des couches de matériau non tissé ou tissé, chaque couche ondulable 9 et 11 peut comprendre une couche de matériau de liaison, laquelle s'étend en surface de la couche ondulable 9 et 11 concernée, en étant disposée face à la couche rétractable 7. Le matériau de liaison est choisi pour avoir un pouvoir liant ou collant, lorsqu'il est soumis à un traitement de liaison, par exemple du type thermique ou chimique. Ce matériau de liaison est par exemple une colle thermofusible, dont l'activation est réalisée à l'aide d'un traitement thermique de liaison.

Chaque couche ondulable 9 et 11 est liée à la couche rétractable 7 par exécution locale du traitement de liaison, sur la couche de matériau de liaison, au niveau de plusieurs traits de liaison 13 qui sont espacés les uns des autres et s'étendent selon la direction B1, tel qu'illustré sur les figures 1 à 3. Ainsi, alors que la couche de matériau de liaison s'étend de façon continue selon la direction A1, cette couche de matériau de liaison est traitée localement, seulement au niveau des traits de liaison 13, de façon que les couches ondulables 9 et 11 ne soient liées à la couche rétractable 7 qu'au niveau de ces traits de liaison 13. Dans le cas d'un traitement de liaison thermique, le traitement thermique de liaison n'est appliqué que localement, au niveau des traits de liaison et n'entraîne pas la rétractation de la couche rétractable 7.

On peut également effectuer d'autres types de traitements de liaison, notamment une liaison par soudage par ultrasons.

Alternativement à un traitement de liaison, les couches ondulables 9 et/ou 11 peuvent être liées avec la couche rétractable 7, au niveau des traits de liaison 13, à l'aide d'une liaison mécanique, par exemple une couture ou un agrafage.

Les traits de liaison 13 sont représentés sur les figures 1 à 3 comme étant linéiques selon la direction B1, c'est-à-dire ponctuels selon la direction A1. Toutefois, en pratique, les traits de liaison 13 présentent une certaine largeur, non nulle, selon la direction A1, afin de garantir la résistance mécanique de la liaison entre les couches ondulables 9 et 11 et la couche rétractable 7.

Par ailleurs, comme illustré aux figures 1 à 4, la disposition des couches ondulables 9 et 11 est donc symétrique par rapport au plan P7, chaque couche 9 et 11 étant liée à la couche 7 au niveau de traits de liaison 13 communs.

Alternativement à une couche de matériau de liaison continûment disposée au sein des couches ondulables 9 et 11, on peut prévoir une soudage ou un collage local, au niveau des traits de liaison 13, de chaque couche ondulable 9 et 11 sur la couche rétractable 7.

En variante, on peut prévoir que les couches ondulables 9 et 11 sont dépourvues de couche de matériau de liaison, et que la grille de chaque couche ondulable 9 et 11 est elle-même, au moins partiellement, réalisée dans un matériau qui présente un caractère liant suite à l'exécution du traitement de liaison.

En variante, on peut prévoir que les couches ondulables 9 et 11 sont dépourvues de couche de matériau de liaison, et que les fils de la couche rétractable 7 sont eux-même, au moins partiellement, réalisés dans un matériau qui présente un caractère liant suite à l'exécution du traitement de liaison.

En variante encore, tout ou partie des fils d'au moins l'une des couches 7, 9 et 11 peuvent être enduits d'un matériau collant qui présente un caractère liant suite à l'exécution du traitement de liaison.

En variante, on prévoit que la couche 7 est liée à la couche 11 par des traits de liaison distincts et superposés avec d'autres traits de liaisons par l'intermédiaire desquels la couche 9 est liée à la couche 11. En variante encore, on prévoit que les traits de liaison liant la couche 7 avec la couche 11 ne sont pas superposés avec les traits de liaison liant la couche 9 avec la couche 11. Par exemple, le long de la direction A1, on alterne un trait de liaison liant les couches 7 et 11 avec un trait de liaison liant les couches 9 et 11, de sorte que les tronçons 15 sont en décalage ou en quinconce par rapport aux tronçons 17.

De manière générale, les traits de liaison peuvent être irrégulièrement espacés le long de la direction A1, ou le pas des traits de liaison de la couche 9 peut être différent de celui des traits de liaison de la couche 11.

En tout état de cause, les couches ondulables 9 et 11 sont liées à la couche rétractable 7 en plusieurs lieux séparés le long de la direction A1, et de façon continue selon le long de la direction B1, sur toute la surface de la couche rétractable 7 selon ces deux directions A1 et B1. Les couches ondulables 9 et 11 ne sont pas liées à la couche rétractable 7 entre deux traits de liaison 13 consécutifs.

On définit les tronçons 15 de la première couche ondulable 9, qui sont chacun délimités par deux traits de liaison 13 consécutifs. De même, on définit des tronçons 17 de la deuxième couche ondulable 11, qui sont chacun délimités par deux traits de liaison 13 consécutifs. Sur les figures 1 à 3, chaque couche ondulable 9 et 11 comprend respectivement quatre tronçons 15 et 16 ainsi que cinq traits de liaison 13. Toutefois, on comprend que plus ou moins de tronçons et de traits de liaison peuvent être prévus le long de la direction A1, en fonction de l'application. Par exemple, sur la figure 4, l'armature de renfort 1 comprend huit tronçons 15, huit tronçons 17 et neuf traits de liaison 13, pour former une armature 1 de longueur plus importante selon la direction A1.

Chaque tronçon 15 et 17 forme un pont, solidaire de la couche rétractable 7 à ses extrémités par l'intermédiaire des traits 13. Chaque tronçon 15 et 17 et la couche rétractable 7 délimitent un conduit 19 traversant selon la direction B1.

A l'état initial de la couche rétractable 7, telle qu'illustré sur la figure 2, chaque tronçon 15 et 17 est rabattu contre la couche rétractable 7, de sorte que chaque conduit 19 est de forme aplatie. En d'autres termes, peu ou aucun espace n'est ménagé entre la couche 7 et le tronçon 15 ou 17 concerné, les couches ondulables 9 et 11 s'étendant quasiment à plat le long de la couche rétractable 7. Avantageusement, chaque tronçon 15 et 17 est en contact sur au moins une partie de sa longueur contre la couche 7 à l'état initial.

A l'état initial, comme illustré sur la figure 2, l'armature de renfort 1 est sensiblement plane, ou présente pour le moins une forme aplatie, dont l'épaisseur selon une direction C1, définie perpendiculairement au plan P7, est relativement peu importante. A l'état initial, l'armature de renfort 1 peut ainsi facilement être déplacée ou transportée, par exemple en étant empilée avec d'autres armatures de renfort similaires, ou enroulée sur un rouleau d'axe parallèle à la direction B1, notamment si l'armature de renfort 1 présente une longueur importante selon la direction A1.

Tel qu'illustré sur la figure 3, à l'état rétracté de la couche rétractable 7, les tronçons 15 et 17 des couches ondulables 9 et 11 sont contraints d'adopter une forme courbée ou bombée, du fait du resserrement, selon la direction A1, des traits de liaison 13, sous l'action de la rétractation de la couche 7. En passant de l'état initial à l'état rétracté, la couche rétractable 7 fait donc passer les couches ondulables 9 et 11 d'un état aplati à un état ondulé. La concavité de la courbure des tronçons 15 et 17 est alors orientée en direction de la couche rétractable 7. En d'autres termes, les tronçons 15 sont courbés selon la direction C1 illustrée sur la figure 3, alors que les tronçons 17 sont bombés ou courbés dans une direction opposée. En adoptant cette forme courbée, le volume de conduits 19 est augmenté par rapport à la configuration dans laquelle la couche rétractable 7 est à l'état initial. En pratique, on considère que les tronçons 15 et 17 sont plus courbés dans la configuration de la figure 3 que dans la configuration de la figure 2, le caractère courbé des tronçons 15 et 17 dépendant du taux de rétractation de la couche rétractable 7.

Pour la formation des matériaux composites incluant la matrice 3, tels que décrits ci-avant, l'armature de renfort 1 est noyée dans, remplie par, ou recouverte par, la matrice 3, alors que la couche rétractable 7 est à l'état rétracté, tel qu'illustré sur la figure 4. La matrice 3 occupe ainsi les conduits 19, tout en enveloppant au moins partiellement, et de préférence totalement, l'armature de renfort 1. Les conduits 19 occupés par la matrice 3 le sont totalement dans le cas où la matrice 3 noie l'armature 1, alors que les conduits 19 sont laissés totalement ou partiellement libres lorsque la matrice 3 ne fait que recouvrir l'armature 1.

Pour mettre en œuvre cette armature de renfort 1, on fabrique ou on fournit l'armature de renfort 1 de façon que la couche rétractable 7 soit à l'état initial. Le traitement thermique de rétractation est ensuite effectué sur cette couche rétractable 7, alors que les couches ondulables 9 et 11 sont déjà liées à la couche rétractable 7 au niveau des traits de liaison 13. Le traitement thermique de rétractation fait alors passer la couche rétractable 7 à l'état rétracté, ce qui entraîne la mise à l'état ondulé des couches ondulables 9 et 11.

Dans un premier cas, la couche rétractable 7 étant à l'état rétracté et les couches ondulables 9 et 11 à l'état ondulé, on noie l'armature de renfort 1 dans la matrice 3, alors que cette dernière est dans un état liquide, pour former le matériau composite. Pour cela, l'armature de renfort 1 est par exemple préalablement placée dans un moule correspondant à la forme de la pièce 5, de sorte que le matériau durcissable présente, à la sortie du moule, une forme définitive ou quasi-définitive, correspondant à celle de la pièce 5.

Selon la forme du moule utilisé, on comprend que la forme et les dimensions de de la pièce composite 5 à fabriquer peuvent être adaptés à l'application. Selon la forme de cette pièce et de l'utilisation qu'il en sera fait, la disposition et la répartition d'une ou plusieurs armatures de renfort 1 peut être adaptée. La disposition et la répartition des armatures de renfort 1 dépend notamment des contraintes mécaniques à appliquer sur la pièce de matériau composite. Chaque armature de renfort 1 peut être intégrée en présentant une forme droite comme sur la figure 4, ou en étant fléchie, par courbure de la couche rétractable 7.

Dans un deuxième cas non illustré, qui peut être effectué alternativement ou conjointement au premier cas susmentionné, on rapporte une couche de peau ou feuille, contre la couche ondulable 9 et/ou on rapporte une couche de peau ou feuille contre la couche ondulable 11. Chaque couche de peau est donc liée à la couche ondulable 9 ou 11, en s'étendant parallèlement à la couche rétractable 7. Chaque couche de peau est liée à au moins deux tronçons 15 ou 17 de la couche ondulable 9 ou 11 concernée, par exemple par contre-collage.

Par exemple, la couche de peau est réalisée dans un matériau non tissé synthétique, notamment en polymère, par exemple un polyester, un hybride polyester-cellulosique, un polypropylène, polyéthylène, ou un polyamide.

Alternativement, la couche de peau est réalisée dans un matériau tissé.

De préférence, le traitement thermique de rétractation est effectué sur le lieu ou à proximité du lieu, sur lequel l'armature de renfort 1 est intégrée au matériau composite, c'est-à-dire noyée dans, remplie par, ou recouverte par, la matrice 3 et/ou pourvue de couches de peau. Le transport de l'armature de renfort 1 depuis de son lieu de fabrication jusqu'à ce lieu de mise en œuvre est ainsi facilité.

Alternativement, notamment dans le cas où aucun moyen de traitement thermique de rétractation n'est disponible sur le lieu de formation du matériau composite, on effectue le traitement thermique de rétractation sur le lieu, ou à proximité du lieu, de fabrication de l'armature 1. L'armature 1 est alors transportée d'un lieu à l'autre alors que la couche rétractable 7 est à l'état rétracté.

En variante, les couches ondulables 9 et 11 sont de nature différente. Dans cette variante, au moins l'une des deux comprenant une grille de fils, l'autre étant préférentiellement, au contraire, dépourvue de grille de fils.

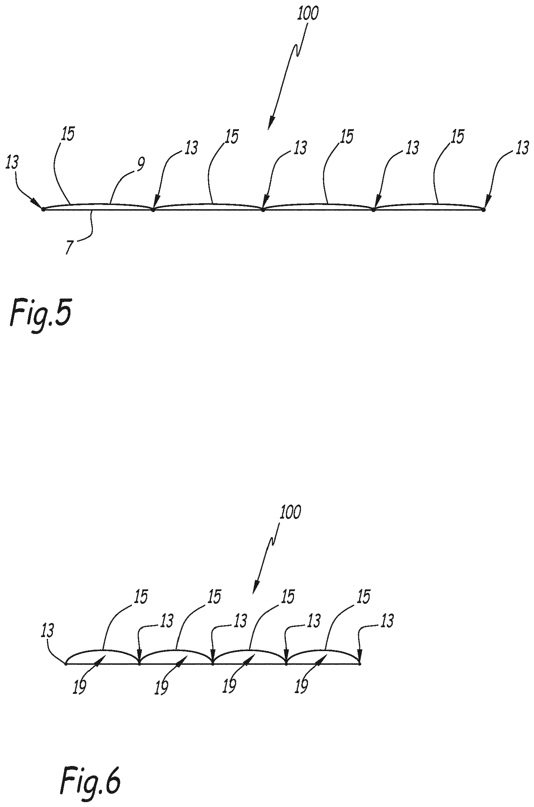

Les figures 5 et 6 décrivent une armature de renfort 100, conforme au deuxième mode de réalisation de l'invention. L'armature de renfort 100 des figures 5 et 6 est similaire à celle des figures 1 à 3, tout en étant dénuée de la couche ondulable 11. Hormis cette couche ondulable 11, l'armature de renfort 100 comprend une couche rétractable 7, une couche ondulable 9, des traits de liaison 13, et des tronçons 15. La couche ondulable 9 est liée à la couche rétractable 7 au niveau des traits de liaison 13, de façon similaire sur l'armature de renfort 1 et sur l'armature de renfort 100.

Sur la figure 5, l'armature de renfort 100 est représentée avec sa couche rétractable 7 à l'état initial, alors qu'à la figure 6, la couche rétractable 7 est à l'état rétracté. Les tronçons 15 définissent des conduits 19 à volume variable en fonction de l'état de la couche 7, ce qui est comparable à l'armature 1 représentée sur la figure 3. La mise en œuvre des armatures de renfort 1 et 100 est donc similaire, à ceci près que l'armature 100 ne comprend qu'une seule couche ondulable 9.

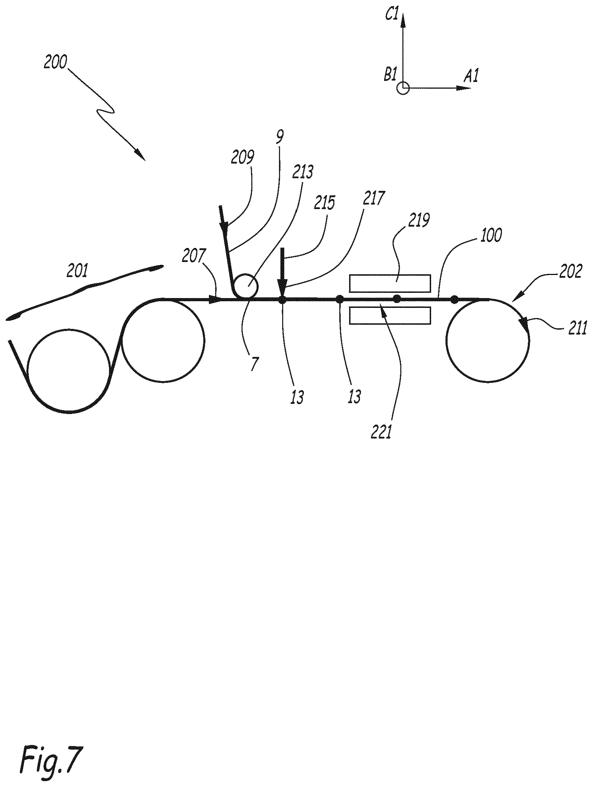

La machine de fabrication 200 de la figure 7 est configurée pour la mise en œuvre d'un procédé de fabrication de l'armature 100 des figures 5 et 6.

La machine 200 comprend un système de rouleaux d'alimentation 201 en couche rétractable 7, avec un mouvement de cette couche rétractable 7 selon la flèche 207, ainsi qu'un système de rouleaux d'alimentation en couche ondulable 9, non représenté, avec un mouvement de couche ondulable 9 selon la flèche 209. Les couches 7 et 9 sont prévues séparément sur leur système de rouleaux d'alimentation respectifs. Un rouleau de sortie 202 est également monté sur la machine 200, sur lequel s'enroule l'armature de renfort 100 fabriqué par la machine 200.

La couche rétractable 7 est tendue selon la direction A1, entre le système de rouleaux 201 et le rouleau de sortie 202, lequel est mis en rotation selon la flèche 211. La couche ondulable 9 est tendue entre un rouleau tendeur 213 et le rouleau de sortie 202, en étant mise en contact avec la couche 7 par le rouleau tendeur 213.

La machine 200 comprend également un dispositif 215, qui effectue le traitement de liaison 217 de façon périodique sur la couche 9 afin de la solidariser à la couche 7. Le dispositif 215 est disposé entre le rouleau tendeur 213 et le rouleau de sortie 202, afin de définir les traits de liaison 13 espacés le long de la direction A1. Pour cela, le dispositif 215 est mobile selon un mouvement alternatif parallèlement à une direction B1, laquelle est perpendiculaire à la direction A1. Le traitement de liaison, qui est par exemple un traitement thermique de liaison, est avantageusement effectué au travers de la couche 9.

De façon optionnelle, la machine 200 comprend un dispositif 219, tel qu'un four, qui est apte à appliquer un traitement thermique de rétractation 221 à l'armature 1, après que le traitement de liaison 217 ait été effectué par le dispositif 215. Pour cela, le dispositif 219 est disposé entre le dispositif 215 et le rouleau de sortie 202.

Pour obtenir une armature 1 avec à la fois une couche ondulable 9 et une couche ondulable 11 comme illustré sur les figures 1 à 4 on peut par exemple répéter le procédé illustré sur la figure 7, ou utiliser un procédé similaire.

La fabrication de l'armature 1 et de l'armature 100 est ainsi particulièrement aisée et peu coûteuse. Cette fabrication peut facilement être effectuée à l'échelle industrielle, directement en aval de postes de fabrication des différentes couches 7, 9 et 11, ou à un lieu séparé.

Quel que soit le mode de réalisation de l'armature décrite ci-avant, selon que cette armature 1 est mise en œuvre seule, noyée, remplie ou recouverte, elle peut être mise en œuvre pour différentes applications :
- pour former une structure légère, en remplacement de structures en nid d'abeille, notamment dans le domaine de l'aéronautique ou de l'automobile, en combinaison avec une ou plusieurs plaques de peau rapportées, par exemple par contre-collage, sur l'armature,
- pour former un coffrage ou une structure coffrée dans le domaine du bâtiment ou des travaux publics, par remplissage de l'armature avec un matériau du genre pierres, sable, ciment, béton, ou similaire, pour remplacer par exemple un élément de type Gabion,
- pour former une digue ou une barrière anti-inondation, en étant remplie ou non par un matériau de remplissage,
- pour former un élément de séparation ou une cloison, ou pour le moins entrer dans la fabrication d'un tel élément de séparation en lui conférant des propriétés d'isolation thermique, ou d'isolation phonique et/ou de résistance au feu,
- matériaux composites complexes, pour former des objets de géométrie particulière tridimensionnelle, tels que des pales d'hélice, ces objets étant par exemple plats, non plats, et/ou comportant un ou plusieurs rayons de courbure,
- pour former un raidisseur, en utilisant des propriétés intrinsèques de résistance en traction et/ou en flexion de l'armature, qui peuvent optionnellement être consolidées en noyant l'armature dans la matrice de consolidation 3 susmentionnée,
- pour former un renfort mécanique à bas coût, entrant dans la réalisation d'une structure composite tridimensionnelle, obtenue en noyant l'armature dans une matrice de consolidation telle que définie ci-avant,
- pour former un matériau souple ou élastique, ou présentant pour le moins des propriétés d'amortissement, entrant dans la réalisation de revêtements de sol, de sièges, de pare-chocs, de matériaux de protection anti-grêle, ou
- pour former des éléments aérés, entrant par exemple dans la réalisation de bâches aérées pour automobiles, de bâches aérées pour protection et séchage de maçonnerie, ou dans la réalisation de matelas.

De nombreuses autres applications sont possibles.

Les caractéristiques de chaque mode de réalisation et variante ci-dessus peuvent être introduites dans les autres modes de réalisations et variantes décrites ci-dessus, pour autant que cela soit techniquement possible.

## Revendications

1. Armature de renfort (1; 100) comprenant :
- une couche rétractable (7) selon une direction de retrait (A1), sous l'effet d'un traitement thermique de rétractation (221), d'un état initial à un état rétracté,
- une première couche ondulable (9), qui comprend une grille de fils rapportée contre la couche rétractable, la grille de fils de la première couche ondulable étant liée à la couche rétractable par des traits de liaison (13) de l'armature de renfort, les traits de liaison étant espacés les uns des autres et s'étendant transversalement par rapport à la direction de retrait, la première couche ondulable présentant un retrait sensiblement nul ou plus faible que celui de la couche rétractable selon la direction de retrait sous l'effet du traitement thermique de rétractation, de manière que :
∘ à l'état initial de la couche rétractable, des tronçons (15) de la première couche ondulable, définis chacun entre deux traits de liaison consécutifs, sont rabattus contre la couche rétractable, et
∘ à l'état rétracté de la couche rétractable, les tronçons de la première couche ondulable sont courbés.

2. Armature de renfort (1; 100) selon la revendication 1, **caractérisée en ce que** la couche rétractable (7) comprend des fils rétractables s'étendant selon la direction de retrait (A1), les fils rétractables étant préférentiellement réalisés en polymère rétractable, synthétique ou naturel, par exemple polyester, polyéther, polyéthylène, polypropylène, polyamide, laine.

3. Armature de renfort (1; 100) selon la revendication 2, **caractérisée en ce que** le polymère rétractable est choisi pour que le traitement thermique de rétractation (221) comprenne un chauffage à une température de retrait comprise entre 100 et 200°C, préférentiellement 180°C.

4. Armature de renfort (1; 100) selon l'une quelconque des revendications 2 ou 3, **caractérisée en ce que** la couche rétractable (7) comprend des fils transversaux qui présentent un retrait sensiblement nul ou plus faible que celui des fils rétractables sous l'effet du traitement thermique de rétractation (221), et qui sont disposés transversalement par rapport à la direction de retrait (A1), tout en étant liés aux fils rétractables afin de former une grille avec les fils rétractables.

5. Armature de renfort (1; 100) selon l'une quelconque des revendications précédentes, **caractérisée en ce que** la grille de la première couche ondulable (9) comprend des fils inorganiques, lesquels comprennent préférentiellement du verre, du carbone, de la céramique ou du métal.

6. Armature de renfort (1; 100) selon l'une quelconque des revendications précédentes, **caractérisée en ce que** la première couche ondulable (9) comprend une couche de matériau non tissé, la grille de la première couche ondulable étant noyée dans, ou liée à, la couche de matériau non tissé.

7. Armature de renfort (1; 100) selon la revendication 6, **caractérisée en ce que** la couche de matériau non tissé est réalisée en polymère, par exemple un polyester, un hybride polyester-cellulosique, un polypropylène, polyéthylène, un polyamide ou un polyuréthane.

8. Armature de renfort (1; 100) selon l'une quelconque des revendications précédentes, **caractérisé en ce que** la première couche ondulable (9) est liée à la couche rétractable (7) par exécution d'un traitement de liaison (217), par exemple de type thermique ou chimique, seulement au niveau de chaque trait de liaison (13).

9. Armature de renfort (1) selon l'une quelconque des revendications précédentes, **caractérisée** en ce l'armature de renfort comprend une deuxième couche ondulable (11), qui comprend une grille de fils rapportée contre la couche rétractable (7), de sorte que la première couche ondulable (9) et la deuxième couche ondulable sont rapportées de part et d'autre de la couche rétractable, la grille de la deuxième couche ondulable étant liée à la couche rétractable par des traits de liaison, qui sont avantageusement superposés ou confondus avec les traits de liaison de la première couche ondulable (9), la deuxième couche ondulable présentant un retrait sensiblement nul ou plus faible que celui de la couche rétractable, selon la direction de retrait (A1), sous l'effet du traitement thermique de rétractation (221), de manière que :
- à l'état initial de la couche rétractable, des tronçons (17) de la deuxième couche ondulable, définis chacun entre deux traits de liaison consécutifs, sont rabattus contre la couche rétractable, et
- à l'état rétracté de la couche rétractable, les tronçons de la deuxième couche ondulable sont courbés.

10. Matériau composite comprenant une armature de renfort (1; 100), conforme à l'une quelconque des revendications précédentes, dont la couche rétractable (7) est à l'état rétracté, et comprenant :
- une matrice (3), l'armature de renfort étant remplie par, recouverte par, ou noyée dans la matrice, et/ou
- une couche de peau rapportée contre la première couche ondulable (9) et liée à la couche ondulable par l'intermédiaire d'au moins deux tronçons (15) courbés.

11. Procédé de mise en œuvre d'une armature de renfort (1; 100), **caractérisé en ce que** l'armature de renfort est conforme à l'une quelconque des revendications 1 à 9, le procédé comprenant une première étape a), au cours de laquelle, la couche rétractable (7) étant à l'état initial, on effectue un traitement thermique de rétractation (221) pour faire passer la couche rétractable à l'état rétracté, ainsi qu'au moins l'une des étapes b) et c) suivantes, effectuées successivement à la première étape a) :
- b) on noie, on remplit ou on recouvre l'armature de renfort avec une matrice (3),
- c) on lie une couche de peau contre la première couche ondulable (9), par exemple par contre-collage, par l'intermédiaire d'au moins deux tronçons (15) courbés.

## Patentansprüche

1. Verstärkungseinlage (1; 100) umfassend:
- eine gemäß einer Schrumpfrichtung (A1) durch die Wirkung einer Schrumpfwärmebehandlung von einem Ausgangszustand in einen geschrumpften Zustand schrumpfbare Schicht (7),
- eine erste wellbare Schicht (9), die ein gegen die schrumpfbare Schicht angesetztes Fadengitter umfasst, wobei das Fadengitter der ersten wellbaren Schicht an die schrumpfbare Schicht durch Verbindungslinien (13) der Verstärkungseinlage gebunden ist und die Verbindungslinien zueinander beabstandet sind und sich quer in Bezug auf die Schrumpfrichtung erstrecken, wobei die erste wellbare Schicht durch die Wirkung der Schrumpfwärmebehandlung gemäß der Schrumpfrichtung eine Schrumpfung von im Wesentlichen Null oder geringer als die der schrumpfbare Schicht aufweist, derart dass:
∘ im Ausgangszustand der schrumpfbaren Schicht Abschnitte (15) der ersten wellbaren Schicht, die jeweils zwischen zwei aufeinanderfolgenden Verbindungslinien definiert sind, gegen die schrumpfbare Schicht umgeschlagen sind und
∘ im geschrumpften Zustand der schrumpfbaren Schicht die Abschnitte der ersten wellbaren Schicht gebogen sind.

2. Verstärkungseinlage (1; 100) nach Anspruch 1, **dadurch gekennzeichnet, dass** die schrumpfbare Schicht (7) schrumpfbare Fäden umfasst, die sich gemäß der Schrumpfrichtung (A1) erstrecken, wobei die schrumpfbaren Fäden vorzugsweise aus schrumpfbarem synthetischen oder natürlichen Polymer, beispielsweise Polyester, Polyether, Polyethylen, Polypropylen, Polyamid, Wolle hergestellt sind.

3. Verstärkungseinlage (1; 100) nach Anspruch 2, **dadurch gekennzeichnet, dass** das schrumpfbare Polymer ausgewählt ist, damit die Schrumpfwärmebehandlung (221) eine Aufheizung auf eine Schrumpftemperatur zwischen 100 und 200 °C, vorzugsweise 180 °C einschließt.

4. Verstärkungseinlage (1; 100) nach einem beliebigen der Ansprüche 2 oder 3, **dadurch gekennzeichnet, dass** die schrumpfbare Schicht (7) Querfäden umfasst, die durch die Wirkung der Schrumpfwärmebehandlung (221) eine Schrumpfung von im Wesentlichen Null oder geringer als die der schrumpfbaren Fäden aufweisen und die in Bezug auf die Schrumpfrichtung (A1) quer angeordnet sind, wobei sie an die schrumpfbaren Fäden gebunden sind, um ein Gitter mit den schrumpfbaren Fäden zu bilden.

5. Verstärkungseinlage (1; 100) nach einem beliebigen der vorhergehenden Ansprüche, **dadurch gekennzeichnet, dass** das Gitter der ersten wellbaren Schicht (9) anorganische Fäden enthält, die vorzugsweise Glas, Carbon, Keramik oder Metall enthalten.

6. Verstärkungseinlage (1; 100) nach einem beliebigen der vorhergehenden Ansprüche, **dadurch gekennzeichnet, dass** die erste wellbare Schicht (9) eine Schicht aus Vliesmaterial enthält, wobei das Gitter der ersten wellbaren Schicht in die oder an die Schicht aus Vliesmaterial eingetaucht oder angebunden ist.

7. Verstärkungseinlage (1; 100) nach Anspruch 6, **dadurch gekennzeichnet, dass** die Schicht aus einem Vliesmaterial aus Polymer, beispielsweise einem Polyester, einem Hybrid Polyester-Cellulose, einem Polypropylen, Polyethylen, einem Polyamid oder einem Polyurethan hergestellt ist.

8. Verstärkungseinlage (1; 100) nach einem beliebigen der vorhergehenden Ansprüche, **dadurch gekennzeichnet, dass** die erste wellbare Schicht (9) mit der schrumpfbaren Schicht (7) durch Ausführen einer Verbindungsbehandlung (217), beispielsweise einer thermischen oder chemischen Verbindungsbehandlung, nur an jeder Verbindungslinie (13) verbunden ist.

9. Verstärkungseinlage (1; 100) nach einem beliebigen der vorhergehenden Ansprüche, **dadurch gekennzeichnet, dass** die Verstärkungseinlage eine zweite wellbare Schicht (11) umfasst, die ein gegen die schrumpfbare Schicht (7) angesetztes Fadengitter umfasst, derart dass die erste wellbare Schicht (9) und die zweite wellbare Schicht beidseitig an die schrumpfbare Schicht gebunden sind, wobei das Gitter der zweiten wellbaren Schicht an die schrumpfbare Schicht durch Verbindungslinien gebunden ist, die vorzugsweise den Verbindungslinien der ersten wellbaren Schicht (9) überlagert sind oder mit diesen übereinstimmen, wobei die zweite wellbare Schicht durch die Wirkung der Schrumpfwärmebehandlung (221) gemäß der Schrumpfrichtung (A1) eine Schrumpfung von im Wesentlichen Null oder geringer als die der schrumpfbaren Schicht aufweist, derart dass:
- im Ausgangszustand der schrumpfbaren Schicht Abschnitte (17) der zweiten wellbaren Schicht, die jeweils zwischen zwei aufeinanderfolgenden Verbindungslinien definiert sind, gegen die schrumpfbare Schicht umgeschlagen sind und
- im geschrumpften Zustand der schrumpfbaren Schicht die Abschnitte der zweiten wellbaren Schicht gebogen sind.

10. Verbundmaterial umfassend eine Verstärkungseinlage (1; 100) entsprechend einem beliebigen der vorhergehenden Ansprüche, deren schrumpfbare Schicht (7) im geschrumpften Zustand ist, und umfassend:
- eine Matrix (3), wobei die Verstärkungseinlage mit der Matrix gefüllt oder bedeckt ist oder in diese eingetaucht ist und/oder
- eine an die wellbare Schicht (9) angesetzte und mit der wellbaren Schicht über mindestens zwei gebogene Abschnitte (15) verbundene Hautschicht.

11. Verfahren zum Herstellen einer Verbindungseinlage (1; 100), **dadurch gekennzeichnet, dass** die Verbindungseinlage nach einem beliebigen der Ansprüche 1 bis 9 ausgebildet ist, wobei das Verfahren einen ersten Schritt a) umfasst, während dem an der schrumpfbaren Schicht (7) im Ausgangszustand eine Schrumpfwärmebehandlung (221) durchgeführt wird, um die schrumpfbare Schicht in den geschrumpften Zustand zu überführen, sowie mindestens einen der folgenden Schritte b) und c), die folgend auf den ersten Schritt a) durchgeführt werden:
- b) Tauchen, Füllen oder Bedecken der Verstärkungseinlage in eine bzw. mit einer Matrix (3),
- c) Verbinden einer Hautschicht mit der ersten wellbaren Schicht (9), beispielsweise durch Kaschieren, mittels mindestens zweier gekrümmter Abschnitte (15).

## Claims

1. A reinforcer (1; 100), comprising:
- a shrinkable layer (7) able to shrink in a direction of shrinkage (A1), under the effect of a heat-shrink heat treatment (221), from an initial state to a shrunk state,
- a first corrugatable layer (9), which comprises a grid work of yarns added against the shrinkable layer, the grid work of yarns of the first corrugatable layer being connected to the shrinkable layer by connection lines (13) spaced apart and extending transversely with respect to the direction of shrinkage, the first corrugatable layer exhibiting a shrinkage that is substantially zero or that is smaller than that of the shrinkable layer along the direction of shrinkage under the effect of the heat-shrink heat treatment, so that:
∘ when the shrinkable layer is in the initial state, portions (15) of the first corrugatable layer, each defined between two consecutive connection lines, are folded down against the shrinkable layer, and
∘ when the shrinkable layer is in the shrunk state, the portions of the first corrugatable layer are curved.

2. The reinforcer (1; 100) according to claim 1, **characterized in that** the shrinkable layer (7) comprises shrinkable yarns extending in the direction of shrinkage (A1), the shrinkable yarns preferably being made from shrinkable polymer, synthetic or natural, for example polyester, polyether, polyethylene, polypropylene, polyamide, wool.

3. The reinforcer (1; 100) according to claim 2, **characterized in that** the shrinkable polymer is chosen so that the heat-shrink heat treatment (221) comprises heating to a shrinkage temperature of between 100 and 200°C, preferably 180°C.

4. The reinforcer (1; 100) according to any one of claims 2 or 3, **characterized in that** the shrinkable layer (7) comprises transverse yarns that exhibit a shrinkage that is substantially zero or that is smaller than that of the shrinkable yarns under the effect of the heat-shrink heat treatment (221), and that are arranged transversely relative to the direction of shrinkage (A1), while being connected to the shrinkable yarns in order to form a gridwork with the shrinkable yarns.

5. The reinforcer (1; 100) according to any one of the preceding claims, **characterized in that** the gridwork of the first corrugatable layer (9) comprises inorganic yarns, which preferably comprise glass, carbon, ceramic or metal.

6. The reinforcer (1; 100) according to any one of the preceding claims, **characterized in that** the first corrugatable layer (9) comprises a layer of nonwoven material, the gridwork of the first corrugatable layer being submerged in, or connected to, the layer of nonwoven material.

7. The reinforcer (1; 100) according to claim 6, **characterized in that** the layer of nonwoven material is made from polymer, for example a polyester, a polyester-cellulose hybrid, a polypropylene, polyethylene, polyamide or polyurethane.

8. The reinforcer (1; 100) according to any one of the preceding claims, **characterized in that** the first corrugatable layer (9) is connected to the shrinkable layer (7) by carrying out a bonding treatment (217), for example of the heat or chemical type, only at each connection line (13).

9. The reinforcer (1) according to anyone of the preceding claims, **characterized in that** the reinforcer comprises a second corrugatable layer (11), which comprises a gridwork of yarns attached against the second shrinkable layer (7), such that the first corrugatable layer (9) and the second corrugatable layer are attached on either side of the shrinkable layer, the gridwork of the second corrugatable layer being connected to the shrinkable layer by connection lines, which are advantageously superimposed on or combined with the connection lines of the first corrugatable layer (9), the second corrugatable layer exhibiting a shrinkage that is substantially zero or that is smaller than that of the shrinkable layer, along the direction of shrinkage (A1), under the effect of the heat-shrink heat treatment (221), so that:
- when the shrinkable layer is in the initial state, portions (17) of the second corrugatable layer, each defined between two consecutive connection lines, are folded down against the shrinkable layer, and
- when the shrinkable layer is in the shrunk state, the portions of the second corrugatable layer are curved.

10. A composite material comprising a reinforcer (1; 100), according to any one of the preceding claims, the shrinkable layer (7) of which is in the shrunk state, and comprising:
- a matrix (3), the reinforcer being filled by, covered by, or submerged in the matrix, and/or
- a skin layer attached against the first corrugatable layer (9) and connected to the corrugatable layer via at least two curved portions (15).

11. A method for using a reinforcer (1; 100), **characterized in that** the reinforcer is according to any one of claims 1 to 9, the method comprising a first step a) during which, the shrinkable layer (7) being in the initial state, a heat-shrink heat treatment (221) is carried out to place the shrinkable layer in the shrunk state, as well as at least one of the following steps b) and c), carried out successively with respect to the first step a):
- b) the reinforcer is submerged in, filled with or covered by a matrix (3),
- c) a skin layer is connected against the first corrugatable layer (9), for example by lamination, by means of at least two curved portions (15).
